# EUROPEAN PATENT APPLICATION

(11) **EP 4 656 696 A1**
(43) Date of publication of application: **03.12.2025**
(21) Application number: 24179107.8
(22) Date of filing: 30.05.2024
(51) Int. Cl.: C09J 7/22, C09J 7/38, B60R 13/08

(54) **A WATER SHIELD FOR VEHICLE DOORS**

(71) Applicant: Sika Technology AG, 6340 Baar (CH)
(72) Inventor: ITO, Fernanda, 13236-385 São Paulo (BR); FREITAS, Anny, 13211-377 São Paulo (BR)
(74) Representative: Sika Patent Attorneys

(57) **Abstract**

The invention is directed to water shield for a vehicle door comprising a sheet-like main body having front and back primary surfaces, wherein the front primary surface comprises an adhesive element and the back primary surface comprises a silicone based coating. The invention is also related to a method for producing water shield and to a vehicle door comprising an interior door panel and a water shield.

## Description

### Technical field

The invention relates to water shields located inside vehicle doors to limit the intrusion of water into the vehicle. The invention also relates to vehicle doors comprising an interior door panel and a water shield adhered to the interior door panel with an adhesive element.

### Background of the invention

Water shields, which also known as "water shredders", are commonly used in vehicle doors, particularly automotive vehicle doors, to limit the intrusion of water to interior space of the vehicle. These types of water shields typically comprise a flexible layer composed of a filled polymeric composition and a sealing portion to seal the water shield to an adjacent panel, especially to an interior door panel, which is typically composed of metal. A vehicle door further comprises a trim panel defining the interior surface of the vehicle, and the water shield is located between the interior (metal) door panel and the trim panel. Some water shields further comprise a pre-applied adhesive element, such as an adhesive layer, which is used for adhering the water shield to the interior door panel.

Commonly used adhesives for bonding a water shield to the interior door panel include pressure sensitive adhesives, which are permanently tacky. Water shields used in mass production of automotive vehicles are typically stored and transported in form of stacks comprising a plurality of shields arranged on top of each other. Due to the tackiness of the pressure sensitive adhesive layer, a release liner is provided between each consecutive water shield in the stack to protect the adhesive layer from environmental impacts and to prevent adjacent water shields from sticking to each other. Siliconized paper is commonly used as a release liner between stacked water shields.

The use of release liners between adjacent water shields in a stack significantly increases the production costs of vehicle doors. Furthermore, since the release liners must be removed before a water shield is installed, the use of release liners creates a significant amount of waste, which must be processed in sustainable way.

There is thus a need for a new type of water shield, which reduces production costs and amount of waste generated during assembly of automotive vehicle doors.

### Summary of the invention

The objective of the present invention is to provide an improved water shield that overcomes or at least mitigates the disadvantages of the prior art water shields used in the automotive industry. Particularly, the objective is to provide a water shield that enables generation of reduced amounts of costs and waste during assembly of vehicle doors.

Surprisingly, it has been found out that the object can be achieved with the features of claim 1.

Specifically, according to the invention, a water shield for a vehicle door is proposed, the water shield comprising a sheet-like main body having front and back primary surfaces, wherein the front primary surface comprises an adhesive element and the back primary surface comprises a silicone based coating.

As it turned out, the use of the claimed water shield enables significant reduction of waste in production of vehicle doors.

Additional aspects of the present invention are presented in further independent claims. Preferred embodiments of the invention are outlined throughout the description and the dependent claims.

### Detailed description of the invention

The subject of the present invention is water shield comprising a sheet-like main body having front and back primary surfaces, wherein the front primary surface comprises an adhesive element and the back primary surface comprises a silicone based coating.

The term "polymer" designates a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to number average molecular weight (Mₙ) of an oligomeric or polymeric mixture of molecules or moieties. The molecular weight may be determined by gel permeation chromatography (GPC) using polystyrene as standard, styrene-divinylbenzene gel with porosity of 100 Angstrom, 1000 Angstrom and 10000 Angstrom as the column and, depending on the molecule, tetrahydrofurane as a solvent, at 35°C, or 1,2,4-trichlorobenzene as a solvent, at 160 °C.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "softening point" or "softening temperature" refers to a temperature at which compound softens in a rubber-like state, or a temperature at which the crystalline portion within the compound melts. The softening point can be measured by a Ring and Ball method according to DIN EN 1238:2011 standard.

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of at least one polymer P" refers to the sum of the individual amounts of all polymers P contained in the composition. For example, in case the composition comprises 20 wt.-% of the at least one polymer P, the sum of the amounts of all polymers P contained in the composition equals 20 wt.-%.

The water shield of the present invention comprises a sheet-like main body having front and back primary surfaces, wherein the front primary surface comprises an adhesive element and the back primary surface comprises a silicone based coating.

The term "adhesive element" refers in the context of the present invention to any type of adhesive composition provided in any kind of form, for example, in form of a layer, bead, or a strip.

In one exemplary embodiment, the adhesive element covers a portion of the front primary surface of the main body, such as not more than 35 %, particularly not more than 25 %, especially not more than 15 % of the total area of the front primary surface.

The adhesive element may be arranged on an edge portion of the front primary surface of the main body. The term "edge portion" is understood to mean a portion of the front primary surface limited by the peripheral edge and extending around the entire periphery of the front primary surface. Especially, the area of the edge portion is not more than 35 % particularly not more than 25 %, especially not more than 15 % of the total area of the front primary surface.

In one exemplary embodiment, the adhesive element is arranged on an edge portion of the front primary surface in form of a single continuous layer/bead/strip extending around the entire periphery of the front primary surface of the main body.

The main body has front and back primary surfaces and a thickness defined between these surfaces.

In one exemplary embodiment, the main body has a thickness of 35 - 250 µm, preferably 50 - 200 µm, more preferably 75 - 150 µm.

The main body is preferably composed of polymeric material.

In one exemplary embodiment, the main body comprises at least 50 wt.-%, preferably at least 75 wt.-%, more preferably at least 90 wt.-% of at least one polymer having a melting temperature determined by differential scanning calorimetry (DSC) according to ISO 11357-3:2018 standard of at or above 115 °C, preferably at or above 135 °C, more preferably at or above 150 °C, even more preferably at or above 175 °C.

Suitable polymers for use in the main body include thermoplastic polymers, such as polyolefins, particularly polypropylene, polyesters, and styrene based polymers.

In one exemplary embodiment, the at least one polymer is selected from polypropylene, polyethylene terephthalate), poly(butylene terephthalate), polystyrene, acrylonitrile butadiene styrene, and polyamide, particularly from polypropylene, polyethylene terephthalate), and poly(butylene terephthalate), especially from polypropylene and poly(ethylene terephthalate).

The back primary surface of the main body comprises a silicone based coating. Such coating is used to prevent adjacent water shields from sticking to each other when the water shields are provided in a stack, for example, during transportation.

In one exemplary embodiment, the silicone based coating comprises at least one polysiloxane polymer, preferably a polydimethylsiloxane. Such coatings can be provided, for example, by coating a composition comprising polysiloxane polymers substituted with various reactive functional groups followed by subsequent chemical crosslinking of the composition, optionally in the presence of a catalyst.

The silicone based coating may have a thickness of not more than 15 µm, particularly not more than 10 µm, especially not more than 5 µm.

It may be preferred that the silicone based coating covers at least 75 %, such as at least 85 %, particularly at least 95 %, of the total area of the back primary surface of the main body.

Suitable adhesives for use in the adhesive element include, for example, pressure sensitive adhesives, particularly hot-melt pressure sensitive adhesives.

In one exemplary embodiment, the adhesive element is composed of a hot-melt adhesive composition, particularly pressure sensitive hot-melt adhesive composition.

Furthermore, the hot-melt adhesive composition may be a foamed hot-melt adhesive composition.

The term "pressure sensitive adhesive " designates in the present disclosure viscoelastic materials, which adhere immediately to almost any kind of substrates by application of light pressure, and which are permanently tacky. The tackiness of an adhesive element can be measured, for example, as a loop tack. The term "pressure sensitive hot-melt adhesive composition" refers to pressure sensitive adhesives that are applied as a melt.

In one exemplary embodiment, the hot-melt adhesive composition comprises:
a) At least one styrene block copolymer,
b) At least one tackifying resin, and
c) Optionally at least one at 25 °C liquid polyolefin resin.

Suitable styrene block copolymers include, particularly, block copolymers containing polystyrene and polybutadiene blocks and/or polyisoprene blocks. These materials are generally available as pure triblock copolymers, also known as SIS and SBS block copolymers, and as diblock copolymers (SI and SB block copolymers). Furthermore, styrene block copolymers are also commercially available as mixtures of diblock and triblock copolymers. Suitable styrene block copolymers can have a linear, radial, or star structure, the linear structure being especially preferred.

In one exemplary embodiment, the hot-melt adhesive composition comprises at least one styrene isoprene diblock (SI) and/or triblock (SIS) copolymer and/or at least one styrene-butadiene diblock (SB) and/or triblock (SBS) copolymer.

Suitable SI, SIS, SB, and SBS block copolymers are commercially available, for example from TSRC/Dexco under the trade name of Vector^{®}, such as Vector^{®} 4000-series, and from Kraton Polymers under the trade name of Kraton^{®} D-series.

In one exemplary embodiment, the hot-melt adhesive composition comprises 10 - 75 wt.-%, preferably 20 - 60 wt.-% of the at least one styrene block copolymer.

The hot-melt adhesive composition further comprises at least one tackifying resin.

The term "tackifying resin" designates in the present document resins that in general enhance the adhesion and/or tackiness of an adhesive composition. The term "tackiness" designates in the present document the property of a substance of being sticky or adhesive by simple contact. The tackiness can be measured, for example, as a loop tack. Preferred tackifying resins are tackifying at a temperature of 25 °C

Examples of suitable tackifying resins include natural resins, synthetic resins and chemically modified natural resins.

Examples of suitable natural resins and chemically modified natural resins include rosins, rosin esters, phenolic modified rosin esters, and terpene resins. The term "rosin" is to be understood to include gum rosin, wood rosin, tall oil rosin, distilled rosin, and modified rosins, for example dimerized, hydrogenated, maleated and/or polymerized versions of any of these rosins.

Suitable terpene resins include copolymers and terpolymers of natural terpenes, such as styrene/terpene and alpha methyl styrene/terpene resins; polyterpene resins generally resulting from the polymerization of terpene hydrocarbons, such as the bicyclic monoterpene known as pinene, in the presence of Friedel-Crafts catalysts at moderately low temperatures; hydrogenated polyterpene resins; and phenolic modified terpene resins including hydrogenated derivatives thereof.

The term "synthetic resin" refers to compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Aliphatic monomers can include C₄, Cs, and C₆ paraffins, olefins, and conjugated diolefins. Examples of aliphatic monomer or cycloaliphatic monomer include butadiene, isobutylene, 1,3-pentadiene, 1,4-pentadiene, cyclopentane, 1-pentene, 2-pentene, 2- methyl-1-pentene, 2-methyl-2-butene, 2-methyl-2-pentene, isoprene, cyclohexane, 1- 3-hexadiene, 1-4-hexadiene, cyclopentadiene, dicyclopentadiene, and terpenes. Aromatic monomer can include C₈, C₉, and C₁₀ aromatic monomer. Examples of aromatic monomer include styrene, indene, derivatives of styrene, derivatives of indene, coumarone and combinations thereof.

Particularly suitable synthetic resins include synthetic resins made by polymerizing mixtures of unsaturated monomers that are obtained as by-products of cracking of natural gas liquids, gas oil, or petroleum naphthas. Such synthetic resins obtained from petroleum-based feedstocks are also characterized as "petroleum resins" or "hydrocarbon resins". These include also pure monomer aromatic resins, which are made by polymerizing aromatic monomer feedstocks that have been purified to eliminate color causing contaminants and to precisely control the composition of the product. Tackifying hydrocarbon resins typically have a relatively low average molecular weight (Mₙ), such in the range of 250 - 5000 g/mol and a glass transition temperature of above 0°C, preferably equal to or higher than 15°C, more preferably equal to or higher than 30°C.

Examples of suitable hydrocarbon resins for use as the tackifying resin include, for example, C5 aliphatic hydrocarbon resins, mixed C5/C9 aliphatic/aromatic hydrocarbon resins, aromatic modified C5 aliphatic hydrocarbon resins, cycloaliphatic hydrocarbon resins, mixed C5 aliphatic/cycloaliphatic hydrocarbon resins, mixed C9 aromatic/cycloaliphatic hydrocarbon resins, mixed C5 aliphatic/cycloaliphatic/C9 aromatic hydrocarbon resins, aromatic modified cycloaliphatic hydrocarbon resins, C9 aromatic hydrocarbon resins, polyterpene resins, and copolymers and terpolymers of natural terpenes as well hydrogenated versions of the aforementioned hydrocarbon resins. The notations "C5" and "C9" indicate that the monomers from which the resins are made are predominantly hydrocarbons having 4-6 and 8-10 carbon atoms, respectively. The term "hydrogenated" includes fully, substantially, and at least partially hydrogenated resins.

Partially hydrogenated resins may have a hydrogenation level, for example, of 50%, 70%, or 90%.

In one exemplary embodiment, the at least one tackifying resin has:
- a softening point measured by a Ring and Ball method according to EN 1238:2011 standard in the range of 65 - 175 °C, preferably 70 - 145 °C, more preferably 75 - 125 °C, and/or
- a number average molecular weight (Mₙ) in the range of 150 - 5000 g/mol, preferably 250 - 3500 g/mol, more preferably 250 - 3000 g/mol, and/or
- a glass transition temperature (T_{g}) determined by dynamical mechanical analysis (DMA) as the peak of the measured loss modulus (G") curve using an applied frequency of 1 Hz and a strain level of 0.1% of at or above 0 °C, preferably at or above 10 °C, more preferably at or above 15 °C.

Suitable hydrocarbon resins are commercially available, for example, under the trade name of Wingtack^{®} series, Wingtack^{®} Plus, Wingtack^{®} Extra, and Wingtack^{®} STS (all from Cray Valley); under the trade name of Escorez^{®} 1000 series, Escorez^{®} 2000 series, and Escorez^{®} 5000 series (all from Exxon Mobile Chemical); under the trade name of Novares^{®} T series, Novares^{®} TT series, Novares^{®} TD series, Novares^{®} TL series, Novares^{®} TN series, Novares^{®} TK series, and Novares^{®} TV series (all from RÜTGERS Novares GmbH); and under the trade name of Kristalex^{®}, Plastolyn^{®}, Piccotex^{®}, Piccolastic^{®} and Endex^{®} (all from Eastman Chemicals).

In one exemplary embodiment, the hot-melt adhesive composition comprises 10 - 75 wt.-%, preferably 20 - 60 wt.-% of the at least one tackifying resin.

In one exemplary embodiment, the hot-melt adhesive composition further comprises at least one at 25 °C liquid polyolefin resin.

The at least one at 25 °C liquid polyolefin resin can have, for example, a number average molecular weight (Mₙ) of not more than 10000 g/mol, preferably not more than 7500 g/mol, such as in the range of 500 - 5000 g/mol, preferably 500 - 3500 g/mol, more preferably 1000 - 3000 g/mol and/or a pour point determined according to ISO 3016:2019 standard in the range of from -10 to +15 °C, preferably from -10 to +10 °C.

In one exemplary embodiment, the at least one at 25 °C liquid polyolefin resin is selected from at 25 °C liquid polyisobutylene (PIB) and at 25 °C liquid polybutene. The term "polyisobutylene" refers in the present disclosure to polyolefins and olefin oligomers of isobutylene or 2-methyl-1-propene, preferably containing at least 75 %, more preferably at least 85 % of repeat units derived from isobutylene. The term "polybutene" refers in the present disclosure to polyolefins and olefin oligomers comprising 1-butene and/or 2-butene and/or isobutylene. The ratio of the C4-Olefin isomers can vary by manufacturer and by grade. When the C4-olefin is exclusively 1-butene, the material is referred to as "poly-n-butene" or "PNB".

Suitable commercially available at 25 °C liquid polybutenes and polyisobutylenes include, for example, Indopol^{®} H-300 and Indopol^{®} H-1200 (from Ineos); Glissopal^{®} V230, Glissopal^{®} V500, and Glissopal^{®} V700 (from BASF); Dynapak^{®} poly 230 (from Univar GmbH, Germany); and Daelim^{®} PB 950 (from Daelim Industrial).

In one exemplary embodiment, the hot-melt adhesive composition comprises 2.5 - 30 wt.-%, preferably 5 - 25 wt.-% of the at least one at 25 °C liquid polyolefin resin.

In one exemplary embodiment, the hot-melt adhesive composition has a Ring & Ball softening point determined by using the method defined in EN 1238:2011 standard of at least 100 °C, preferably at least 115 °C, more preferably at least 125 °C and/or not more than 250 °C, preferably not more than 225 °C, more preferably not more than 200 °C.

The preferences and embodiments for the water shield, including the main body, the adhesive composition, and the silicone based coating as discussed above are also applicable for all other aspects of the present invention unless stated otherwise.

Another aspect of the present invention is a method for producing water shield according to the present invention, the method comprising steps of:
i. Providing a sheet-like main body having front and back primary surfaces, wherein the back primary surface comprises a silicone based coating and
ii. Applying an adhesive composition to the front primary surface of the main body.

Any conventional technique can be used for applying the adhesive composition to the front primary surface of the main body. The adhesive composition can be applied, for example, as a melt using, for example, slot-die, roller, curtain, of spray coating techniques.

In one exemplary embodiment, the adhesive composition is a hot-melt adhesive composition, particularly pressure sensitive hot-melt adhesive composition.

Furthermore, the hot-melt adhesive composition may be a foamed hot-melt adhesive composition.

In one exemplary embodiment, the hot-melt adhesive composition comprises:
a) At least one styrene block copolymer,
b) At least one tackifying resin, and
c) Optionally at least one at 25 °C liquid polyolefin resin.

In one exemplary embodiment, the hot-melt adhesive composition comprises at least one styrene isoprene diblock (SI) and/or triblock (SIS) copolymer and/or at least one styrene-butadiene diblock (SB) and/or triblock (SBS) copolymer.

In one exemplary embodiment, the hot-melt adhesive composition comprises 10 - 75 wt.-%, preferably 20 - 60 wt.-% of the at least one styrene block copolymer.

The hot-melt adhesive composition further comprises at least one tackifying resin.

In one exemplary embodiment, the at least one tackifying resin has:
- a softening point measured by a Ring and Ball method according to EN 1238:2011 standard in the range of 65 - 175 °C, preferably 70 - 145 °C, more preferably 75 - 125 °C, and/or
- a number average molecular weight (Mₙ) in the range of 150 - 5000 g/mol, preferably 250 - 3500 g/mol, more preferably 250 - 3000 g/mol, and/or
- a glass transition temperature (T_{g}) determined by dynamical mechanical analysis (DMA) as the peak of the measured loss modulus (G") curve using an applied frequency of 1 Hz and a strain level of 0.1% of at or above 0 °C, preferably at or above 10 °C, more preferably at or above 15 °C.

In one exemplary embodiment, the hot-melt adhesive composition comprises 10 - 75 wt.-%, preferably 20 - 60 wt.-% of the at least one tackifying resin.

In one exemplary embodiment, the hot-melt adhesive composition further comprises at least one at 25 °C liquid polyolefin resin.

In one exemplary embodiment, the hot-melt adhesive composition comprises 2.5 - 30 wt.-%, preferably 5 - 25 wt.-% of the at least one at 25 °C liquid polyolefin resin.

In one exemplary embodiment, the hot-melt adhesive composition has a Ring & Ball softening point determined by using the method defined in EN 1238:2011 standard of at least 100 °C, preferably at least 115 °C, more preferably at least 125 °C and/or not more than 250 °C, preferably not more than 225 °C, more preferably not more than 200 °C.

Another aspect of the present invention is a vehicle door comprising an interior door panel, preferably an interior metal door panel, and a water shield of the present invention adhered to the interior door panel.

In one exemplary embodiment, the vehicle door further comprises a trim panel, wherein the water shield is arranged between the interior door panel and the trim panel.

Preferably, the water shield is adhered to the interior door panel via the adhesive element arranged on the front primary surface of the main body of the water shield.

Still another aspect of the present invention is a stack of water shields comprising a plurality of water shields of the present invention stacked above one another.

Preferably, the water shields are present in the stack such that the adhesive element of each water shield is directly connected to at least a portion of the silicone based coating of the subsequent water shield or to a release liner.

In one exemplary embodiment, the adhesive element of the topmost water shield in the stack is directly connected to a release liner.

Suitable release liners for use in the stack of water shields include, for example, Kraft paper, polyethylene coated paper, siliconized paper as well as polymeric films, for example, polyethylene, polypropylene, and polyester films coated with polymeric release agents selected from silicone, silicone urea, urethanes, waxes, and long chain alkyl acrylate release agents.

In one exemplary embodiment, the release liner is a siliconized paper.

## Claims

1. A water shield for a vehicle door comprising a sheet-like main body having front and back primary surfaces, wherein the front primary surface comprises an adhesive element and the back primary surface comprises a silicone based coating.

2. The water shield according to claim 1, wherein the main body has a thickness of 50 - 200 µm, preferably 75 - 150 µm.

3. The water shield according to claim 1 or 2, wherein the main body comprises at least 50 wt.-%, preferably at least 75 wt.-% of at least one polymer having a melting temperature determined by differential scanning calorimetry (DSC) according to ISO 11357-3:2018 standard of at or above 115 °C, preferably at or above 135 °C.

4. The water shield according to claim 3, wherein the at least one polymer is selected from polypropylene, polyethylene terephthalate), poly(butylene terephthalate), polystyrene, acrylonitrile butadiene styrene, and polyamide, preferably from polypropylene, polyethylene terephthalate), and poly(butylene terephthalate).

5. The water shield according to any one of previous claims, wherein the silicone based coating comprises at least one polysiloxane polymer, preferably polydimethylsiloxane.

6. The water shield according to any one of previous claims, wherein the adhesive layer is composed of a hot-melt adhesive composition, preferably a pressure sensitive hot-melt adhesive composition.

7. The water shield according to claim 6, wherein the hot-melt adhesive composition comprises:
a) At least one styrene block copolymer,
b) At least one tackifying resin, and
c) Optionally at least one at 25 °C liquid polyolefin resin.

8. The water shield according to claim 7, wherein the hot-melt adhesive composition comprises at least one styrene isoprene diblock (SI) and/or triblock (SIS) copolymer and/or at least one styrene-butadiene diblock (SB) and/or triblock (SBS) copolymer.

9. A method for producing water shield according to any one of previous claims comprising steps of:
i. Providing a sheet-like main body having front and back primary surfaces, wherein the back primary surface comprises a silicone based coating and
ii. Applying an adhesive composition to the front primary surface of the main body.

10. A vehicle door comprising an interior door panel and a water shield according to any one of claims 1-8 adhered to the interior door panel.

11. The vehicle door according to claim 10 further comprising a trim panel, wherein the water shield is arranged between the interior door panel and the trim panel.

12. The vehicle door according to claim 10 or 11, wherein the water shield is adhered to the interior door panel via the adhesive element arranged on the front primary surface of the main body of the water shield.

13. A stack of water shields comprising a plurality of water shields according to any one of claims 1-8 stacked above one another.

14. The stack according to claim 13, wherein the water shields are present in the stack such that the adhesive element of each water shield is directly connected to at least a portion of the silicone based coating of the subsequent water shield or to a release liner.

15. The stack according to claim 14, wherein the adhesive element of the topmost water shield of the stack is directly connected to a release liner, preferably a siliconized paper.
